(19) Europäisches Patentamt
European Patent Office
Office européen des brevets

(11) **EP 1 252 482 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(51) Int Cl.:
***G01D 5/30*** (2006.01) ***G01D 5/26*** (2006.01)

(21) Anmeldenummer: **01903660.7**

(86) Internationale Anmeldenummer:
**PCT/EP2001/000577**

(22) Anmeldetag: **18.01.2001**

(87) Internationale Veröffentlichungsnummer:
**WO 2001/053778 (26.07.2001 Gazette 2001/30)**

(54) **VERFAHREN UND ANORDNUNG ZUR OPTISCHEN POSITIONSBESTIMMUNG EINES BEWEGBAREN SPIEGELS**

METHOD AND ARRANGEMENT FOR OPTICALLY DETECTING THE POSITION OF A MOVEABLE MIRROR

PROCEDE ET DISPOSITIF POUR DETERMINER OPTIQUEMENT LA POSITION D'UN MIROIR MOBILE

(84) Benannte Vertragsstaaten:
**AT BE CH CY DE DK ES FI FR GB GR IE IT LI LU MC NL PT SE TR**

(30) Priorität: **19.01.2000 DE 10002196**

(43) Veröffentlichungstag der Anmeldung:
**30.10.2002 Patentblatt 2002/44**

(73) Patentinhaber: **Heidelberg Instruments Mikrotechnik GmbH**
**D-69126 Heidelberg (DE)**

(72) Erfinder:
• **VOGLER, Sven**
**08259 Fonollosa (Barcelona) (ES)**
• **KAPLAN, Roland**
**69126 Heidelberg (DE)**
• **WEIKERT, Robert**
**91207 Lauf (DE)**
• **WIJNAENDTS-VAN-RESANDT, Roelof**
**76669 Bad Schönborn (DE)**

(74) Vertreter: **Schmitt, Meinrad**
**Reble & Klose**
**Rechts- und Patentanwälte**
**Konrad-Zuse-Ring 32**
**68163 Mannheim (DE)**

(56) Entgegenhaltungen:
**EP-A- 0 390 969    DE-A- 4 212 066**
**US-A- 4 851 660**

**Beschreibung**

Die Erfindung bezieht sich auf ein Verfahren zur Erzeugung eines Stellwertes für einen Positionsregelkreis gemäß der im Oberbegriff des Patentanspruchs 1 angegebenen Merkmale. Ferner bezieht sich die Erfindung auf eine Vorrichtung zur Durchführung dieses Verfahrens.

Aus der EP-A-0 390 969 ist ein derartiges Verfahren bekannt, gemäß welchem ein mittels einer Lichtquelle erzeugter Meßstrahl von einem bewegbaren Meßobjekt in Form eines Spiegels reflektiert wird und auf einen positionsempfindlichen Lichtdetektor gelangt, wobei der Meßstrahl mittels eines optischen Systems auf dem Lichtdetektor fokussiert wird. Die mittels des Lichtdetektors erhaltenen Meßwerte werden einem Rechner oder Signalprozessor zugeführt, in welchem durch Interpolation ein dem Schwerpunkt oder dem Maximum der Intensitätsverteilung des fokussierten Meßspots entsprechendes Positionssignal bestimmt wird. Die analogen Signale des Lichtdetektors werden dem Signalprozessor direkt zugeführt und zunächst analog weiter verarbeitet, wobei ferner der Soll-Position entsprechende Signale einbezogen werden, um ein digitales interpoliertes Signal entsprechend der ermittelten Position des Fokusspots zu erhalten. Das interpolierte Signal wird einem Regelkreis zum Ansteuern des Meßobjekts zugeführt. Es ergeben sich keine Hinweise, bei der Interpolation eine Funktion zu berücksichtigen, welche mit der Funktion der tatsächlichen Intensitätsverteilung des Meßstrahls auf dem Lichtdetektor korrespondiert. Ferner werden die analogen Signale direkt dem Signalprozessor zugeführt.

Ferner ist aus der DE-A-42 12 066 ein Verfahren und eine Vorrichtung zur Lagebestimmung einer optischen Linie bekannt, gemäß welchem ein die optische Linie enthaltendes Bild mit einer Videokamera zeilenweise aufgenommen wird, um ein Videosignal sowie ein Pixelclock abzugeben. Aus dem Videosignal wird eine digitale Darstellung der genannten optischen Linie ermittelt, wobei die Videokamera derart ausgerichtet wird, daß die Zeilen der Videokamera die optische Linie kreuzen. Es erfolgt keine Positionsregelung und auch nicht die Bestimmung eines Positionssignals durch Interpolation, und Hinweise für eine dahingehende Kombination werden nicht vermittelt.

Aus dem Buch: Bauelemente der Optik, Taschenbuch für Konstrukteure, H.Naumann und G. Schröder, 4. Ausgabe, Hanser-Verlag, 1983, ist ein Verfahren bekannt, welches als Autokollimationsverfahren bezeichnet wird und die Messung der Winkelposition von Drehspiegeln ermöglicht. Hierbei wird ein mittels einer Kollimationslinse kollimierter Strahl als Messstrahl an dem zu vermessenden Spiegel reflektiert, und der Winkel des reflektierten Strahls zum einfallenden Lichtstrahl wird beim rückwärtigen Durchlaufen der Kollimationslinse in eine Positionsinformation umgewandelt. Diese Informationsumwandlung bringt jedoch eine zusätzliche Fehlerquelle in Form von Linsenfehlern in die Messung ein. Eine rechnerische Korrektur derartiger Fehler verlängert die Rechenzeit bei der Ermittlung der Informationen, welche der momentanen Winkelposition des Drehspiegels entsprechen.

Ferner ist aus dem US-Patent 4 318 582 eine zweidimensionale Scan-Einrichtung bekannt, welche zwei Drehspiegel zur Ablenkung eines Lichtstrahles einer Lichtquelle, insbesondere eines Lasers, in zwei im wesentlichen senkrechten Richtungen zueinander aufweist. Die Drehspiegel werden mittels elektrischen Antrieben gedreht wobei zur Bestimmung der Drehwinkelposition der Drehspiegel Signalgeneratoren vorgesehen sind, weiche mit den Antriebsachsen der elektrischen Antriebsmotoren gekoppelt sind. Die mittels der Signalgeneratoren erfaßten Informationen werden dem jeweiligen Positionsregelkreis des jeweiligen Drehspiegels zugeführt. Derartige Signalgeneratoren zur Erfassung der Winkelstellung einer Welle sind üblicherweise induktive oder elektromagnetische Positionsdetektoren welche eine hochpräzise Fertigung erfordern und den heutigen Genauigkeitsanforderungen in der Praxis kaum oder nur mit einem großen Fertigungsaufwand genügen.

Hiervon ausgehend liegt der Erfindung die Aufgabe zugrunde, das Verfahren dahingehend auszubilden, daß eine schnelle optische Messung der Position von Spiegeln, insbesondere Drehspiegeln, mit einem einfachen optischen Aufbau realisierbar ist. Mit einem geringen Aufwand soll eine Erhöhung der Auflösung erreicht werden. Ferner soll die zur Durchführung des Verfahrens vorgesehene Vorrichtung einen geringen apparativen Aufwand erfordern und zusätzliche Fehlerquellen vermeiden. Des weiteren soll eine schnelle optische Messung der Position von Spiegeln, insbesondere in Scan-Einrichtungen, mit einem einfachen optischen Aufbau realisiert werden und ein Signal erzeugt werden, das als Regelwert in einen dem genannten Spiegel zugehörigen Regelkreis eingegeben oder direkt als Stellsignal für den vermessenen Spiegel verwendet werden kann.

Die Lösung dieser Aufgabe hinsichtlich des Verfahrens erfolgt gemäß den im Patentanspruch angegebenen Merkmalen. Hinsichtlich der Vorrichtung erfolgt die Lösung gemäß den im Patentanspruch 8 angegebenen Merkmalen.

Das vorgeschlagene Verfahren und die zur Durchführung desselben vorgeschlagene Vorrichtung ermöglichen mit geringem Aufwand eine schnelle optische Messung der Position des Messobjektes, das insbesondere als Spiegel oder Reflektor ausgebildet ist und dessen mechanische Bewegung optisch erfaßt wird. Eine der mechanischen Bewegung des Messobjektes entsprechende, insbesondere proportionale Verschiebung eines Lichtpunktes auf dem positionsempfindlichen Lichtdetektor wird genutzt, welcher nachfolgend auch als optischer Positionssensor bezeichnet wird. Als Lichtquelle ist insbesondere ein Halbleiterlaser oder ein Diodenlaser vorgesehen, und mittels eines optischen Systems wird ein reelles Bild der Lichtquelle auf dem Lichtdetektor bzw. Positionssensor erzeugt. Das optische System ist als Fokussiereinheit ausgebildet und kann im einfachsten Fall als eine Linse mit positiver Brennweite, als Sammellinse oder auch als ein System mehrerer Linsen, wie beispielsweise Achromat oder Objektiv ausgebildet sein. Mittels der Lichtquelle und einer Apertur mit vorgegebenem Öffnungsdurchmesser A wird ein Messstrahl erzeugt, welcher mittels des optischen Systems und/oder der Fokussiereinheit auf den Spiegel gerichtet und von diesem auf den positionsempfindlichen Lichtdetektor bzw. optischen Positionssensor abgelenkt wird. In vorteilhafter Weise wird der Lichtstrahl bzw. Messstrahl vom Messobjekt oder Spiegel direkt auf den Lichtdetektor gelenkt, so daß zusätzliche Fehler, insbesondere aufgrund von Linsenfehlern vermieden werden. Das vorgeschlagene Verfahren und die zur Durchführung desselben vorgeschlagene Vorrichtung ermöglichen die schnelle Erzeugung eines Regelwertes für die Positionierung von Drehspiegeln mittels Einsatz eines fokussierten Laserstrahls als Messstrahl sowie einer Berechnung und / oder einer Interpolation, welche die Positionsbestimmung des Messstrahls mit höherer Auflösung als der Detektorauflösung ermöglicht und somit die Verwendung eines schnell auslesbaren Detektors geringerer Auflösung zuläßt.

Es sei festgehalten, daß im Gegensatz zum eingangs erwähnten Autokollimationsverfahren erfindungsgemäß kein paralleles Licht am Spiegel bzw. Reflektor, welche auch als Messobjekt bezeichnet werden, reflektiert wird und das optische Abbildungssystem nicht zweifach benutzt wird. Zwischen der Lichtquelle und dem optischen Abbildungssystem ist in vorteilhafter Weise eine Apertur mit einem vorgegebenen Öffnungsdurchmesser vorgesehen. Das optische Abbildungssystem ist als Fokussiereinheit ausgebildet, und der Positionssensor bzw. Lichtdetektor steht im Fokus des am Messobjekt bzw. Spiegel oder Reflektor fokussierten Messstrahles. Die Größe des vom positionsempfindlichen Lichtdetektor erfaßten Lichtpunktes oder Spots ist praktisch nicht entscheidend, da dessen Mittenposition Verwendung findet. Die Mitte des Lichtflecks oder Spots ist durch die maximale Intensität oder bei gleichmäßiger Intensität durch die geometrische Mitte des Spots definiert. Der Lichtdetektor enthält einzelne Bereiche oder Zellen, die nachfolgend Pixel genannt werden, wobei elektrische Signale in Abhängigkeit, bevorzugt proportional zur Strahlungsintensität auf dem jeweiligen Pixel erzeugt werden. Als Lichtdetektor bzw. dessen Bereiche oder Pixel können Fotodioden, Fototransistoren, CCD-Elemente, lichtempfindliche Widerstände oder auch analoge Bildaufnahmeröhren zum Einsatz gelangen. Mittels des positionsempfindlichen Lichtdetektors und einer nachgeschalteten Elektronik erfolgt eine Digitalisierung des fokussierten Lichtstrahles oder Spots, wobei mittels der den Spot erfassenden Pixeln elektrische Messwerte entsprechend der jeweiligen Strahlungsintensität erzeugt werden. Die Messwerte enthalten Informationen über die Intensität bzw. Intensitätsverteilung des Spots.

Die Messwerte werden einem Berechnungsverfahren und / oder Interpolationsverfahren zur Bestimmung des Schwerpunktes oder des Maximums der Intensitätsverteilung des Lichtstrahles oder Spots unterzogen. Hierbei wird in vorteilhafter Weise die Verteilungsfunktion der Intensität des Lichtes des Spots zugrunde gelegt und bei der Auswertung oder Berechnung berücksichtigt. Hierzu kann insbesondere bei zunächst stillstehendem Messobjekt oder Spiegel oder Reflektor die Verteilungsfunktion des mittels des Lichtdetektors erfaßten Spots erfaßt und in den Rechner eingegeben werden mittels welchem während der Durchführung des Verfahrens nachfolgend der Schwerpunkt oder das Maximum der Intensitätsverteilung bestimmt wird. Des weiteren kann in einer bevorzugten Ausgestaltung die bekannte Verteilungsfunktion der Intensität in den Rechner eingegeben werden und insbesondere in einem Speicher für die Berechnung bereit gehalten werden. Aus den Messwerten, welche Informationen über die Intensität an den diskreten Messpunkten oder Abtastpunkten der Pixel beinhalten, wird aufgrund der erfindungsgemäßen Auswertung und Berechnung nunmehr auch die Information zur Lage des Schwerpunktes oder Maximums an den Positionen bestimmt, an welchen insbesondere aufgrund der endlichen Größe der einzelnen Bereiche oder Zellen des Lichtdetektors nicht gemessen wurde. Die als bekannt vorausgesetzte oder zuvor bestimmte Verteilungsfunktion der Intensität ermöglicht in besonders vorteilhafter Weise somit die Bestimmung des Schwerpunktes oder des Maximums der Intensitätsverteilung. Aufgrund der erfindungsgemäß durchgeführten Berechnung wird die Auflösung des Lichtdetektors oder Positionssensors in besonders zweckmäßiger Weise erhöht. Es wird somit eine Positionsbestimmung des Messstrahles mit einer höheren Auflösung als der Detektorauflösung ermöglicht. Somit kann für eine hohe Auflösung ein schnell auslösbarer Lichtdetektor mit geringerer Auflösung zum Einsatz gelangen.

Weiterbildungen und besondere Ausgestaltungen der Erfindung sind in den Unteransprüchen und der nachfolgenden Beschreibung besonderer Ausführungsbeispiele angegeben.

Die Erfindung wird nachfolgend an Hand der in den Zeichnungen dargestellten Ausführungsbeispiele näher erläutert, ohne daß insoweit eine Einschränkung erfolgt. Es zeigen:

Fig. 1     eine schematische Darstellung der Vorrichtung,

Fig. 2     eine Darstellung ähnlich Fig. 1 zur Erläuterung der verwendeten Formelzei- chen,

Fig. 3     eine schematische Darstellung der Intensitätsverteilung des Spots und der Abtastwerte,

Fig. 4     eine schematische Darstellung eines weiteren Ausführungsbeispiels der Vorrichtung mit einem linear bewegbaren Spiegel,

Fig. 5    ein Blockschaltbild der Auslese- und Regelelektronik.

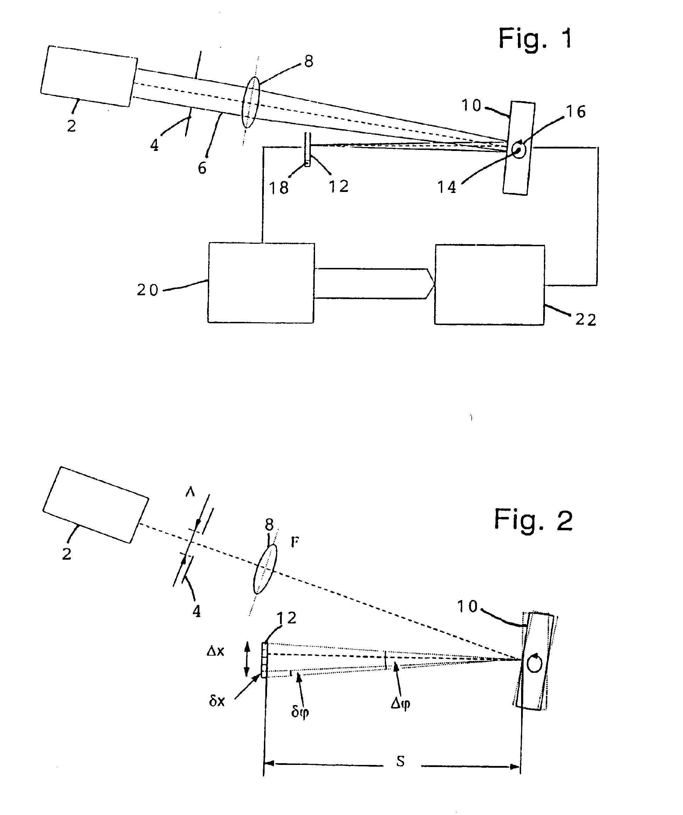

Fig. 1 zeigt die Vorrichtung enthaltend eine Lichtquelle 2, welche insbesondere als Laser und / oder Diodenlaser ausgebildet ist. Mittels einer Apertur 4. welche einen vorgegebenen Öffnungsdurchmesser A aufweist, wird ein Messstrahl 6 erzeugt, welcher in ein optisches Abbildungssystem 8 gelangt. Das optische Abbildungssystem 8 enthält im einfachsten Fall eine Linse mit positiver Brennweite bzw. eine Sammellinse, wobei gegebenenfalls auch ein System aus mehreren Linsen, wie z. B. ein Achromat oder Objektiv vorgesehen sein kann. Wie ersichtlich, gelangt vom optischen System 8 der Messstrahl auf einen zu vermessenden Spiegel 10 und wird von diesem unter einem vorgegebenen, bevorzugt kleinen Winkel zur Senkrechten auf einen positionsempfindlichen Lichtdetektor 12 reflektiert. Der Spiegel 10 ist hierbei als Drehspiegel ausgebildet, welcher um eine zur Zeichenebene orthogonale Achse 14 gemäß Pfeil 16 drehbar ist. Mittels des optischen Systems 8 wird der Messstrahl mit langer Brennweite fokussiert, wobei der Lichtdetektor 12 im Fokus steht. Als positionsempfindlicher Lichtdetektor 12, der auch als Positionsdetektor bezeichnet wird, gelangt beispielsweise eine Diodenzeile mit insbesondere 168 Zellen 18 zum Einsatz, um die Position des fokalen Lichtflecks oder Fokusspots zu messen. In der Zeichnung sind aus Gründen der Übersicht nur wenige derartige Zellen 18 dargestellt, wobei die Anzahl derselben den jeweiligen Anforderungen entsprechend vorgegeben wird. Dies gilt auch hinsichtlich der Größe der Zellen 18, wobei die Zellen 18 beispielsweise jeweils eine Kantenlänge von ca. 64 $\mu$m aufweisen. Die Zellen 18 sind lichtempfindliche Bereiche und werden nachfolgend Pixel genannt und ermöglichen die Erzeugung von elektrischen Signalen entsprechend und / oder proportional der Strahlungsintensität auf dem jeweiligen Pixel. Hierzu werden die auf die einzelnen fotoempfindlichen Zellen 18 oder Pixel fallenden Lichtleistungen ausgelesen. Der Fokusspot besitzt einen Durchmesser D, welcher um einen vorgegebenen Faktor größer ist als die Größe oder Kantenlänge der Pixel 18. Der genannte Faktor liegt vorzugsweise im Bereich zwischen 10 und 30, insbesondere zwischen 15 und 25. Dem positionsempfindlichen Lichtdetektor 12 ist eine Elektronikeinheit 20 nachgeschaltet, welche bevorzugt als Regelkreiselektronik ausgebildet ist und mittels welcher die ermittelte Position des Fokusspots mit der errechneten Sollposition bei am Spiegel 10 eingestelltem Sollwinkel verglichen wird. Alternativ oder zusätzlich wird mittels der Elektronikeinheit das Rechenverfahren und / oder Interpolationsverfahren zur Ermittlung bzw. Bestimmung der Position des Schwerpunktes oder der Mitte entsprechend der maximalen Intensität oder der geometrischen Mitte bei gleichmäßiger Intensität des Fokusspots durchgeführt. Aus der Differenz wird ein analoges Regelsignal für einen dem Spiegel 10 zugeordneten integrierten Regelkreis 22 erzeugt.

Ist das Meßobjekt 10 als Spiegel, insbesondere als Drehspiegel, ausgebildet, so kann dieser Spiegel Bestandteil einer Scan-Einrichtung sein. Der Spiegel wird in dieser bevorzugten Ausgestaltung somit doppelt genutzt, wobei die Lichtquelle 2 in der erläuterten Weise den Meßstrahl erzeugt und wobei ferner mittels einer weiteren Lichtquelle, die zweckmäßig gleichfalls als Laser ausgebildet ist, daß Scanverfahren durchgeführt wird, Die durch die vorgeschlagene optische Positionsbestimmung mittels des Lichtdetektors und der nachfolgenden Auswertung und Berechnung des Schwerpunktes oder Maximums der Intensitätsverteilung erhaltenen Ist-Werte der Spiegelposition werden in der erläuterten Weise von der Elektronikeinheit 20 dem Regelkreis 22 des Spiegels 10 bereitgestellt, wobei ferner die zum Scannen und Positionieren des Spiegels 10 der Scan-Einrichtung benötigten Werte, insbesondere Positions-Sollwerte, in das Regelsystem einbezogen werden.

Gemäß Fig. 2 besitzt die Apertur 4 einen Öffnungsdurchmesser A und das optische Abbildungssystem 8 eine Brennweite F. Auf die einzelnen fotoempfindlichen Zellen oder Pixel 18 fallenden Lichtleistungen werden ausgelesen, und bei einem geeigneten Verhältnis zwischen dem Fokusspot-Durchmesser D auf dem Lichtdetektor 12 und der Pixelgröße $\delta x$ wird durch ein Rechen- und / oder Interpolationsverfahren die Position des Schwerpunktes oder der Mitte des Fokusspots des Messstrahles aus diesen Informationen beispielsweise auf 1/12 der Größe der einzelnen Zellen oder Pixel 18 genau ermittelt. Der Durchmesser D des Fokusspots ergibt sich aus dem Aperturdurchmesser A, der Brennweite F des optischen Systems 8 und der Wellenlänge $\lambda$ des verwendeten Laserlichts über

$$D = \frac{\pi F}{\lambda A}$$

Die Winkelauflösung $\delta\varphi$ des Systems ergibt sich aus der Auflösung für die Bestimmung der Strahlposition von beispielsweise $\delta x/12$ und dem Abstand S zwischen Spiegel 10 und Detektor 12 über

$$\delta\varphi \approx \frac{\delta x / 12}{S}$$

Der detektierbare Drehwinkelbereich $\Delta\varphi$ ergibt sich in gleicher Weise aus der Ausdehnung $\Delta x$ des Detektors:

$$\Delta \varphi = \frac{\Delta x}{S}$$

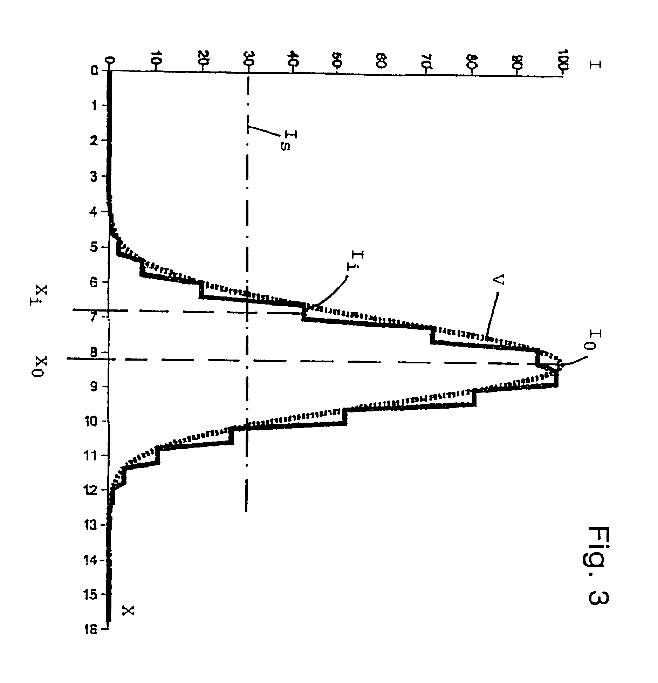

Fig. 3 zeigt als Prinzipdarstellung die Intensitätsverteilung eines Spots sowie die mittels des Lichtdetektors erfaßten Abtast- oder Meßwerte an den über die Längserstreckung X des Lichtdetektors aufgetragenen Positionen Xi. Den einzelnen Intensitätswerten Ii ist eine Position Xi zugeordnet. Bei diesem Ausführungsbeispiel entspricht die Intensitätsverteilung I einer Glockenkurve oder einer Gaußschen Verteilungskurve mit einem ausgeprägten Maximum in $X_0$. Wie ersichtlich, liegt der größte erfaßte Abtastwert in Folge der endlichen Größe der Pixel des Lichtdetektors beabstandet zum tatsächlichen Maximum der Intensitätskurve. Erfindungsgemäß wird insbesondere mittels des bereits erwähnten Rechners, welchem die Abtastwerte der Intensitätsverteilung des Spots auf dem Lichtdetektor zur Verfügung gestellt werden, eine Berechnung, insbesondere durch Interpolation, des Schwerpunktes oder der maximalen Intensität durchgeführt. Diese Berechnung erfolgt grundsätzlich gemäß folgender Formel:

$$X_0 = \frac{\sum I_i \cdot X_i}{\sum I_i}.$$

Zweckmäßig werden aus den vorliegenden Meßwerten oder einer vorgegebenen Teilmenge derselben, beispielsweise drei geometrisch aufeinanderfolgende Meßwerte herangezogen, von welchen einer der maximal erfaßte Meßwert sein muß. Die ausgewählten Meßwerte dienen zur Berechnung der Parameter einer Beschreibungsfunktion entsprechend der Intensitätsverteilung. So können beispielsweise drei Meßwerte zur Beschreibung einer Parabel mit drei Parametern benötigt werden. Aus den derart berechneten Parametern wird dann die Position $X_0$ der maximalen Intensität $I_0$ berechnet. Von besonderer Bedeutung ist hierbei, daß die grundsätzlich bekannte Verteilungsfunktion der Intensität bei der Berechnung berücksichtigt wird. In bevorzugter Weise wird die Berechnung aufgrund einer mit der tatsächlichen Intensitätsverteilung korrespondierenden Funktion durchgeführt. Ist es beispielsweise bekannt, daß die Meßwerte des Spots grundsätzlich auf einer Glockenkurve liegen, so wird dieser Sachverhalt bei der Berechnung des Schwerpunktes bzw. des Maximums der Intensitätsverteilung V berücksichtigt. Aus den durch die Messung mittels des Lichtdetektors erhaltenen Meßwerten bzw. Informationen über die Intensität an diskreten Meßpunkten oder Abtastpunkten wird aufgrund der erfindungsgemäßen Berechnung und Auswertung die Information zur Lage des Maximums an den Positionen bereitgestellt, an welchen aufgrund der endlichen Größe der Zellen des Lichtdetektors Meßwerte nicht erhalten werden. Diese zusätzliche Information über die Lage des Maximums ergibt sich aus der als bekannt vorausgesetzten Verteilungsfunktion der Intensität.

Bei dieser Berechnung bzw. Interpolation wird in bevorzugter Weise eine Unterdrückung der niedrigen Intensitätswerte durchgeführt, welche mit einem relativ hohen Fehler behaftet sind. Hierzu wird ein Mindestwert oder Schwellwert $I_s$ vorgegeben. Der Schwellwert $I_s$ liegt in einem vorgegebenen Betrag unterhalb des maximalen Meßwertes, und zwar bevorzugt im Bereich zwischen 20 bis 50%, vorteilhaft in der Größenordnung von 30%. Ist bei dem dargestellten Ausführungsbeispiel der Schwellwert Is mit 30% vorgegeben, so werden bei diesem Ausführungsbeispiel sechs Meßwerte bei der vorstehend erläuterten Berechnung berücksichtigt. Somit kann bei ausreichender Ausleuchtung von Pixel eine Auflösung weit über der geometrischen Auflösung des Lichtdetektors erreicht werden.

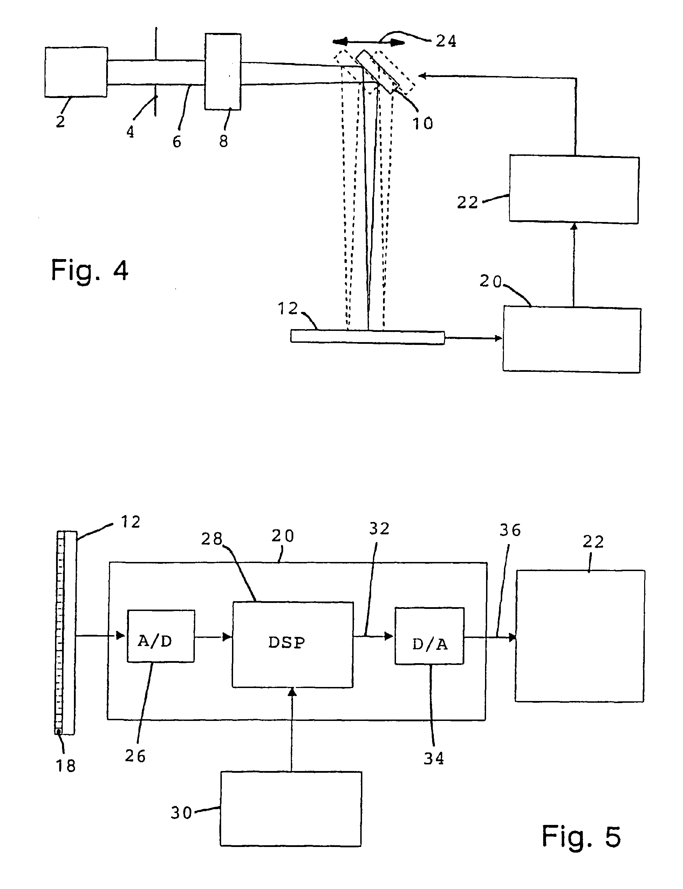

Fig. 4 zeigt ein weiteres Ausführungsbeispiel, gemäß welchem das Meßobjekt 10 gemäß Doppelpfeil 24 linear bewegbar ist. Mit gestrichelten Linien sind linear versetzt zueinanderliegende Positionen des Meßobjektes 10 angedeutet, welches insbesondere als Reflektor ausgebildet ist. Entsprechend der Bewegung des Meßobjektes 10 wird der Meßspot auf dem positionsempfindlichen Lichtdetektor 12 bewegt. Die obigen Erläuterungen zu den übrigen Komponenten, wie Lichtquelle 2, Apertur 4 usw. gelten auch für dieses Ausführungsbeispiel entsprechend.

Fig. 5 zeigt ein Blockschaltbild der Elektronikeinheit 20, welche auch als Auslese- und Regelelektronik bezeichnet werden kann. Das Auslesen der Pixel 18 des Lichtdetektors 12 erfolgt insbesondere seriell über einen A/D-Wandler 26, und zwar beispielsweise mit einer 8 Bit Auflösung. Die digitalisierten Daten werden an einen nachgeschalteten Signalprozessor 28 übermittelt, welcher zunächst aus den Meßwerten der einzelnen Pixel 18, vorzugsweise über eine Interpolation, die Bestimmung der Position des Schwerpunktes der Intensitätsverteilung in der oben erläuterten Weise durchführt. Bei dieser Berechnung bzw. Interpolation werden in vorteilhafter Weise durch Einführung des Mindestwertes oder Schwellwertes fehlerbehaftete niedrige Meßwerte unterdrückt und bei der Berechnung bzw. Interpolation nicht berücksichtigt. Dem Rechner oder DSP 28 wird von einem Systemsteuerungsrechner 30 ein Sollwert. insbesondere ein 16 Bit Sollwert, für die Position des Fokusspots zugeführt, welcher aus der Sollwinkelposition des Meßobjektes bzw. Spiegels berechnet wurde. Mit diesem Wert wird der berechnete bzw. interpolierte Schwerpunkt verglichen und aus der Abweichung wird ein digitaler Regelwert 32 erzeugt. Hieraus wird in dem folgenden D/A-Wandler 34, welcher bevorzugt als ein 14 oder 16 Bit D/A-Wandler ausgebildet ist, ein analoger Regelwert 36 erzeugt, welcher dem Regelkreis 22 des Meßobjektes oder Spiegels zugeführt wird.

**Bezugszeichen**

| | |
|---|---|
| 2 | Lichtquelle / Laser |
| 4 | Apertur |
| 6 | Meßstrahl |
| 8 | optisches Abbildungssystem |
| 10 | Meßobjekt / Spiegel / Reflektor |
| 12 | positionsempfindlicher Lichtdetektor / optischer Positionsdetektor |
| 14 | Drehachse von 10 |
| 16 | Pfeil |
| 18 | fotoempfindliche Zelle / Pixel |
| 20 | Elektronikeinheit |
| 22 | Regelkreis für 10 |
| 24 | Doppelpfeil |
| 26 | A/D-Wandler |
| 28 | Rechner / digitaler Signalprozessor / DSP |
| 30 | Systemsteuerungsrechner |
| 32 | digitaler Regelwert |
| 34 | D/A-Wandler |
| 36 | analoger Regelwert |
| A | Aperturweite |
| D | Durchmesser des Fokusspots |
| I | Intensität |
| $I_s$ | Schwellwert |
| $I_0$ | Maximum |
| S | Abstand zwischen 10 und 12 |
| X | Position |
| V | Intensitätsverteilung |
| $\Delta x$ | Detektorausdehnung / Zeilenlänge |
| $\Delta \varphi$ | Winkelbereich der Messung |
| $\delta x$ | Pixelgröße |
| $\delta \varphi$ | Winkelauflösung |

**Patentansprüche**

1. Verfahren zur Erzeugung eines Stellwertes für einen Positionsregelkreis eines bewegbaren Messobjektes (10), insbesondere eines Spiegels oder Reflektors, wobei zur optischen Positionsbestimmung ein mittels einer Lichtquelle (2) erzeugter Messstrahl (6), welcher mittels eines optischen Systems (8) auf einen Lichtdetektor (12) fokussiert wird, vom Messobjekt (10) reflektiert wird und auf den positionsempfindlichen Lichtdetektor (12) gelangt, mittels welchem eine Umwandlung in eine der Position des Messobjekts (10) entsprechende Information durchgeführt wird, wobei aus den mittels des Lichtdetektors (12) erhaltenen Messwerten durch Interpolation mittels eines Signalprozessors (28) ein dem Schwerpunkt oder dem Maximum ($I_0$) der Intensitätsverteilung des fokussierten Messspots entsprechendes Positionssignal bestimmt wird und wobei mittels des Signalprozessors (28) durch digitalen Vergleich der durch die Interpolation ermittelten Position des Fokusspots mit der Soll-Position ein digitaler Regelwert erzeugt wird und ferner aus diesem Regelwert mittels eines D/A-Wandlers (34) ein analoger Regelwert erzeugt wird, welcher in einen dem Messobjekt (10) zugeordneten Regelkreis (22) eingegeben wird, **dadurch gekennzeichnet, dass** die Messwerte seriell über einen A/D-Wandler (26) ausgelesen werden und die digitalisierten Daten an einen digitalen Signalprozessor (28) übermittelt werden, mittels welchem die Interpolation unter Berücksichtigung einer mit der Funktion der tatsächlichen Intensitätsverteilung korrespondierenden Verteilungsfunktion durchgeführt wird, und dass mittels eines Systemsteuerrechners (30) die Soll-Position des Messobjekts (10) berechnet und dem Signalprozessor (28) zugeführt wird.

2. Verfahren nach Anspruch 1, **dadurch gekennzeichnet, dass** bei der Bestimmung des Schwerpunktes oder des Maximums ($I_0$) eine bekannte Verteilungsfunktion der Intensität (I) berücksichtigt wird.

3. Verfahren nach Anspruch 1 oder 2, **dadurch gekennzeichnet, dass** bei der Bestimmung des Schwerpunktes oder des Maximums mittels eines vorgegebenen Schwellwertes (Is) geringere Intensitätswerte unterdrückt werden.

4. Verfahren nach Anspruch 3, **dadurch gekennzeichnet, dass** der Schwellwert (Is) im Bereich zwischen 20 bis 50 %, vorzugsweise in der Größenordnung von 30 % der maximalen Intensität ($I_0$) vorgegeben wird.

5. Verfahren nach einem der Ansprüche 1 bis 4, **dadurch gekennzeichnet, dass** ein Stellwert zur direkten Regelung der Spiegelposition erzeugt wird.

6. Verfahren nach einem der Ansprüche 1 bis 5, **dadurch gekennzeichnet, dass** es in einer Scaneinrichtung eingesetzt wird, wobei als Messobjekt (10) der gleiche Spiegel genutzt wird, mittels welchem das Scanverfahren unter Einsatz einer weiteren Lichtquelle durchgeführt wird.

7. Verfahren nach einem der Ansprüche 1 bis 6, **dadurch gekennzeichnet, dass** die korrespondierende Verteilungsfunktion bei zunächst stillstehendem Messobjekt (10) bestimmt und in den Signalprozessor (28) eingegeben wird.

8. Verfahren nach einem der Ansprüche 1 bis 6, **dadurch gekennzeichnet, dass** die korrespondierende Verteilungsfunktion in einem Speicher des Signalprozessors (28) bereit gehalten wird.

9. Vorrichtung zur Durchführung des Verfahrens nach einem der Ansprüche 1 bis 8 mit einer bevorzugt als Laser ausgebildeten Lichtquelle (2), einem zur Erzeugung eines Messstrahls (6) der Lichtquelle (2) nachgeordneten optischen Abbildungssystem (8), welches als Fokussiereinheit ausgebildet ist und über ein Messobjekt (10) einen Fokusspot auf einem positionsempfindlichen Lichtdetektor (12) erzeugt, sowie mit einer dem Lichtdetektor (12) nachgeschalteten Elektronikeinheit (20), welche einen Signalprozessor (28) enthält, der über einen D/A-Wandler (34) mit einem Regelkreis (22) des Messobjekts (10) verbunden ist, **dadurch gekennzeichnet, dass** dem Lichtdetektor (12) der A/D-Wandler (26) und diesem der Signalprozessor (28) nachgeschaltet ist, mit welchem der Systemsteuerungsrechner (30) verbunden ist, und dass der Signalprozessor (28) einen Speicher für die Verteilungsfunktion enthält.

10. Vorrichtung nach Anspruch 9, **dadurch gekennzeichnet, dass** die Elektronikeinheit (20) zur Bestimmung des Maximums und/oder des Schwerpunktes ($I_0$) der Intensitätsverteilung ausgelegt ist und dass der Elektronikeinheit (20) der Regelkreis (22) zur Positionsregelung des Messobjektes (10) nachgeschaltet ist.

**Claims**

1. Method for generating a control value for a position control circuit of a moveable measurement object (10), in particular a mirror or reflector, wherein to determine an optical position a measuring beam (6), generated by means of a light source (2), which is focused on to a light detector (12) by means of an optical system (8), is reflected by the measurement object (10) and reaches the position-sensitive light detector (12), by means of which a conversion into information corresponding to the position of the measurement object (10) is carried out, a position signal corresponding to the centroid or to the maximum ($I_0$) of the intensity distribution of the focussed measuring spot being determined from the measurements obtained by means of the light detector (12) by interpolation using a signal processor (28), and a digital control value being generated by means of the signal processor (28) by digital comparison of the position determined by the interpolation of the focusing spot with the target position, and in addition, an analogue control value being generated from this control value by means of a D/A-converter (34), which value is input into a control circuit (22) assigned to the measurement object (10), **characterized in that** the measurements are serially read off using an A/D-converter (26) and the digitised data are transmitted to a digital signal processor (28), by means of which the interpolation is carried out taking into account a distribution function corresponding to the function of the actual intensity distribution, and that the target position of the measurement object (10) is calculated by means of a system control computer (30) and supplied to the signal processor (28).

2. The method according to Claim 1, **characterized in that** in determining the centroid or the maximum ($I_0$) a known distribution function of the intensity (I) is taken into account.

3. The method according to Claim 1 or 2, **characterized in that** in determining the centroid or the maximum, lower intensity values are suppressed by means of a pre-specified threshold value ($I_s$).

4. The method according to Claim 3, **characterized in that** the threshold value ($I_s$) is pre-specified in the range between 20 to 50 %, preferably in the order of magnitude of 30 % of the maximum intensity ($I_0$).

5. The method according to one of Claims 1 to 4, **characterized in that** a control value is generated for the direct control of the mirror position.

6. The method according to one of Claims 1 to 5, **characterized in that** it is employed in a scanning device, wherein the same mirror is used for the measurement object (10) as that with which the scanning method is carried out with the use of an additional light source.

7. The method according to one of Claims 1 to 6, **characterized in that** the corresponding distribution function is determined with the measurement object (10) first being at rest, and is input into the signal processor (28).

8. The method according to one of Claims 1 to 6, **characterized in that** the corresponding distribution function is stored in a memory of the signal processor (28).

9. An apparatus for carrying out the method according to one of Claims 1 to 8, comprising a light source (2) preferably embodied in the form of a laser, an optical imaging system (8), arranged downstream of the light source (2) for generating a measuring beam (6), which is embodied as a focussing unit and generates a focussing spot via a measurement object (10) on a position-sensitive light detector (12), and comprising an electronics unit (20) connected downstream of the light detector (12), which contains a signal processor (28), connected via a D/A-converter (34) to a control circuit (22) of the measurement object (10),
**characterized in that**
the signal processor (28), to which the system control computer (30) is connected, is downstream of the A/D-converter (26), which is downstream of the light detector (12), and that the signal processor (28) contains a memory for the distribution function.

10. The apparatus according to Claim 9,
**characterized in that**
the electronics unit (20) is designed to determine the maximum and/or the centroid ($I_0$) of the intensity distribution and that the electronics unit (20) is connected downstream of the control circuit (22) for position control of the measurement object (10).

**Revendications**

1. Procédé pour générer une valeur de réglage pour un circuit régulateur de position d'un objet à mesurer (10) mobile, en particulier d'un miroir ou d'un réflecteur, un faisceau de mesure (6) généré au moyen d'une source de lumière (2), qui est focalisé au moyen d'un système (8) optique sur un détecteur de lumière (12), étant réfléchi par l'objet à mesurer (10) pour la détermination de position optique et arrivant au détecteur de lumière (12) sensible à la position, au moyen duquel une conversion en une information correspondant à la position de l'objet à mesurer (10) est effectuée, un signal de position correspondant au centre de gravité ou au maximum ($I_0$) de la répartition d'intensité du spot de mesure focalisé étant déterminé à partir des valeurs mesurées obtenues au moyen du détecteur de lumière (12) par interpolation au moyen d'un processeur de signal (28) et une valeur de réglage numérique étant générée au moyen du processeur de signal (28) par comparaison numérique de la position, déterminée par l'interpolation, du spot de foyer avec la position théorique et une valeur de réglage analogique étant générée également à partir de cette valeur de réglage au moyen d'un convertisseur numérique - analogique (34), laquelle valeur est entrée dans un circuit régulateur (22) attribué à l'objet à mesurer (10),
**caractérisé en ce que** les valeurs mesurées sont extraites en série au moyen d'un convertisseur analogique - numérique (26) et les données numérisées sont transmises à un processeur numérique de signal (28), au moyen duquel l'interpolation est effectuée en tenant compte d'une fonction de répartition correspondant avec la fonction de la répartition d'intensité réelle, et **en ce que** la position théorique de l'objet à mesurer (10) est calculée au moyen d'un calculateur de commande de système (30) et est amenée au processeur de signal (28).

2. Procédé selon la revendication 1, **caractérisé en ce qu'**une fonction de répartition connue de l'intensité (I) est prise en compte lors de la détermination du centre de gravité ou du maximum ($I_0$).

3. Procédé selon la revendication 1 ou 2, **caractérisé en ce que** des valeurs d'intensité assez faibles sont supprimées lors de la détermination du centre de gravité ou du maximum au moyen d'une valeur seuil ($I_s$).

4. Procédé selon la revendication 3, **caractérisé en ce que** la valeur seuil ($I_s$) est prédéfinie dans la plage comprise entre 20 et 50 %, de préférence de l'ordre de 30 % de l'intensité maximale ($I_0$).

5. Procédé selon l'une quelconque des revendications 1 à 4, **caractérisé en ce qu'**une valeur de réglage est générée pour le réglage direct de la position du miroir.

6. Procédé selon l'une quelconque des revendications 1 à 5, **caractérisé en ce qu'**on utilisé un dispositif de balayage, dans lequel on utilise comme objet à mesurer (10) le même miroir au moyen duquel le procédé de balayage est mis en oeuvre en utilisant une autre source de lumière.

7. Procédé selon l'une quelconque des revendications 1 à 6, **caractérisé en ce** la fonction de répartition correspondante est déterminée avec l'objet à mesurer (10) d'abord immobile et est entrée dans le processeur de signal (28).

8. Procédé selon l'une quelconque des revendications 1 à 6, **caractérisé en ce que** la fonction de répartition correspondante est mise à disposition dans une mémoire du processeur de signal (28).

9. Dispositif pour mettre en oeuvre le procédé selon l'une quelconque des revendications 1 à 8 comprenant une source de lumière (2) conçue de préférence comme laser, un système de représentation (8) optique placé en aval de la source de lumière (2) pour générer un faisceau de mesure (6), lequel système est conçu comme unité de focalisation et génère au moyen d'un objet à mesurer (10) un spot de foyer sur un détecteur de lumière (12) sensible à la position, et une unité d'électronique (20) montée en aval du détecteur de lumière (12), laquelle contient un processeur de signal (28) qui est relié par un convertisseur numérique - analogique (34) à un circuit régulateur (22) de l'objet à mesurer (10),
**caractérisé en ce que** le convertisseur analogique - numérique (26) est monté en aval du détecteur de lumière (12) et le processeur de signal (28) est monté en aval de ce convertisseur, processeur avec lequel le calculateur de commande de système (30) est relié, et **en ce que** le processeur de signal (28) contient une mémoire pour la fonction de répartition.

10. Dispositif selon la revendication 9, **caractérisé en ce que** l'unité d'électronique (20) est conçue pour la détermination du maximum et/ou du centre de gravité ($I_0$) de la répartition d'intensité et **en ce que** le circuit régulateur (22) pour le réglage de position de l'objet à mesurer (10) est monté en aval de l'unité d'électronique (20).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0390969 A
- DE 4212066 A
- US 4318582 A

**In der Beschreibung aufgeführte Nicht-Patentliteratur**

- **H.Naumann ; G. Schröder.** Bauelemente der Optik, Taschenbuch für Konstrukteure. Hanser-Verlag, 1983